# EUROPEAN PATENT APPLICATION

(11) **EP 3 621 190 A1**
(43) Date of publication of application: **11.03.2020**
(21) Application number: 18193023.1
(22) Date of filing: 06.09.2018
(51) Int. Cl.: H02M 1/32, H02M 1/00, H02M 7/483

(54) **IMPROVED PROTECTION METHOD FOR A SEMICONDUCTOR MODULE BASED CHAIN-LINK OR MMC CELL BY A DC CROW-BAR**

(71) Applicant: ABB Schweiz AG, 5400 Baden (CH)
(72) Inventor: STEINKE, Juergen, 79774 Albbruck (DE); MAIBACH, Philippe, 5037 Muhen (CH)
(74) Representative: Kransell & Wennborg KB

(57) **Abstract**

A control device for an arrangement of switches, the switches being arranged to form at least one current path or branch, wherein each of the at least one current paths or branches comprises two switches and wherein two AC terminals (AC1, AC2) being connected to the current paths and wherein the control device being adapted to monitor and determine an electrical condition of any of the switches, based on predetermined measurable conditions and wherein the control device is further adapted to output a control signal, if a predetermined threshold of the monitored and determined conditions is reached and/or exceeded for a specific amount of time, wherein the control signal is inputted into a semiconductor based short-circuiting device for activation of said device, wherein the semiconductor based short-circuiting device is switched electrically parallel to the current paths and is further configured to short-circuit the two AC terminals (AC1, AC2) and to short-circuit a capacitor, switched electrically parallel to the current paths, in such a duration of time, that a majority of energy stored in the capacitor is dissipated in the semiconductor based short-circuiting device and a minority of the energy stored in the capacitor is dissipated in the switches.

## Description

### FIELD OF INVENTION

Embodiments of the present disclosure generally relate to the field of voltage inverter and power converter technology. In particular, the application relates to devices and methods to monitor and protect modular multilevel converter cells, in particular modular multilevel cells for chain-link converters.

### BACKGROUND OF INVENTION

Power converters are mainly used to convert a DC voltage to an AC voltage. In particular, with HVDC systems (HVDC=High Voltage Direct Current) such a power converter may be used to generate a high-voltage AC from a high voltage DC and vice versa. Furthermore, power converters are used in FACTS systems (e.g. STATCOM for reactive power compensation, static frequency converters).

In converters, cells comprising switches, arranged as Full bridges or Half bridges may be used. The switches may preferably be semiconductors, in particular transistors like Insulated Gate Bipolar Transistors (IGBT). In so-called Multi Modular Converters, a multitude of these cells (modules), switched in series, may be used.

The switches in the cells (the semiconductors respectively), may have the problem that one of the switches in the full- or half-bridge may fail. Typical failures can be, that one switch may lose its blocking capability while in blocking mode or that it fails into a short during the current turn-off transient.

Both failures, either immediately or after a short delay, may result into a short circuit path for the DC capacitor via the healthy semiconductor in series with the failed one. In case of the semiconductor being an IGBT, the healthy IGBT will change into the de-saturation status and limit the short circuit current. The normal reaction of the control system is then to send a command that may turn-off the desaturated switch and which would bring the cell into a safe mode.

Unfortunately this sequence may sometimes fail, and the modules might explode, depending on the stored energy in the DC capacitor and the design of the systems. A known way to reduce the possibility of damage in such a scenario is to add a fast DC capacitor shorting device, often called DC crow-bar, between the DC-terminals of the DC capacitor. A typically used device for a crow-bar may be a thyristor.

A known way of using it is to fire it, i.e. activating the thyristor, as soon as de-saturation turn-off fails. Especially in the case that at least two converters (like e.g. a rectifier and an inverter) are connected to a common DC capacitor (in that case providing a dc-link), this way of operation is common because it only leads to a short of the DC capacitor in case the faulty path cannot be interrupted. By that method, shorting all AC-terminals via the shorted DC capacitor is avoided for the case of a successful de-saturation turn-off.

In the moment, when the de-saturation turn-off fails, the current in the failed devices is already quite high. Between detecting this fault and commanding the DC crow-bar to short, a short time delay will occur, which increases the dissipated energy in the failed devices.

After commanding the short, the DC crow-bar takes over the current with a layout determined di/dt, until the current is zero in the IGBT path. This adds to the total dissipated energy. Designing the protection in this way is critical and usually results only in avoiding major destruction, if properly designed and tested.

In an MMC cell with a half-bridge topology, even if the de-saturation turn-off is successful, the problem remains that the DC capacitor stays charged and is permanently present between the AC-terminals, in case the failed device is the device which is not connected between the AC terminals. In order to proceed with the operation of the MMC, the cell needs to be shorted.

Just shorting the AC terminals in that situation would result in a pulse discharge of the DC capacitor through the failed device and the AC shorting device, which could result in an explosion of the failed device.

This can only be avoided by commanding the crow-bar to short the DC capacitor before shorting the AC terminals. A possible solution related to the above mentioned drawbacks and problems is therefore highly appreciated.

### SUMMARY OF INVENTION

In order to address the foregoing and other potential problems, embodiments of the present disclosure may propose:

In a first aspect of the present application, a control device for an arrangement of switches may be disclosed. The switches may be arranged to form at least one current path or branch, wherein each of the at least one current paths may comprise two switches and wherein two AC terminals may be connected to the current paths and wherein the control device being adapted to monitor and determine an electrical condition of any of the switches, based on predetermined, measurable conditions and wherein the control device is further adapted to output a control signal, if a predetermined threshold of the monitored and determined conditions is reached and/or exceeded for a specific amount of time, wherein the control signal may be inputted into a semiconductor based short-circuiting device for activation of said device, wherein the semiconductor based short-circuiting device may be switched electrically parallel to the current paths and is further configured to short-circuit the two AC terminals and to short-circuit a capacitor, switched electrically parallel to the current paths, in such a duration of time, that a majority of energy stored in the capacitor is dissipated in the semiconductor based short-circuiting device and a minority of the energy stored in the capacitor is dissipated in the switches. Actually, the AC terminals are short-circuited or bridged by the combination of free-wheeling diodes in the semiconductors (Transistors, in particular IGBTs) and the semiconductor based short-circuiting device.

In another aspect of the present application, a modular multilevel cell comprising a control device according to embodiments of the application is disclosed.

In yet another aspect of the present application, a chain-link converter comprising modular multilevel cells according to embodiments of the application is disclosed.

In another aspect, a method for short-circuiting AC terminals of a modular multilevel cell is disclosed. The method may comprise: Monitoring and measuring a parameter in a semiconductor switch in a current path of the modular multilevel cell; Comparing the measured parameter with a predetermined threshold of the parameter; Issuing a control signal when the predetermined threshold of the parameter has been reached and/or exceeded; and activating, with the control signal a semiconductor based short-circuiting device, which is switched electrically parallel to the current paths, to short-circuit the two AC terminals (AC1, AC2) and to short-circuit a capacitor, switched electrically parallel to the current paths.

### BRIEF DESCRIPTION OF DRAWINGS

Embodiments of the present disclosure will be presented in the sense of examples and their advantages are explained in greater detail below, with reference to the accompanying drawings, wherein:
FIG. 1 shows a half- and a full-bridge cell with a crow-bar as short circuiting device for the capacitors (local energy storage);
FIG. 2 shows a half- and a full-bridge cell without a short circuiting device for the capacitors (local energy storage);
FIG. 3 shows a full-bridge cell with a switch failing short;
FIG. 4 is a timing diagram in a fault case with a fired crow-bar;
FIG. 5 is a timing diagram in a fault case at non-successful de-saturation turn-off;
FIG. 6 is a timing diagram in a fault case at a successful de-saturation-turn-off.

### DETAILED DESCRIPTION OF EMBODIMENTS

Hereinafter, the principle and spirit of the present disclosure will be described with reference to the illustrative embodiments. It should be understood, all these embodiments are given merely for the skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

In a properly designed converter, including also chain-link and MMC converters, the probability that the de-saturation turn-off fails is quite low, but still has to be considered.

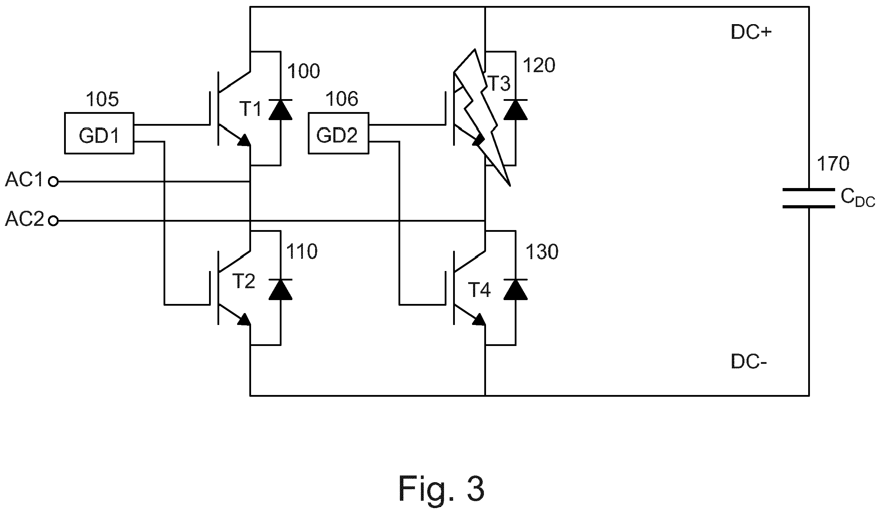

For chain-link and MMC converters with built-in redundancy in form of at least one extra cell, the case is, due to the high number of cells, to be considered with respect to availability, because this fault may lead to a stop of the converter. Fig. 3 shows an example of a commonly used design. One can see a full-bridge design of a cell with a capacitor 170 but with no further short circuiting device. One of the switches (T3, 120) falls short. The normal reaction of the control system is then to send a command that may turn-off of the desaturated switch and which would bring the cell into a safe mode. This may sometimes fail and an explosion of the semiconductors may occur due to the discharge of the capacitor 170.

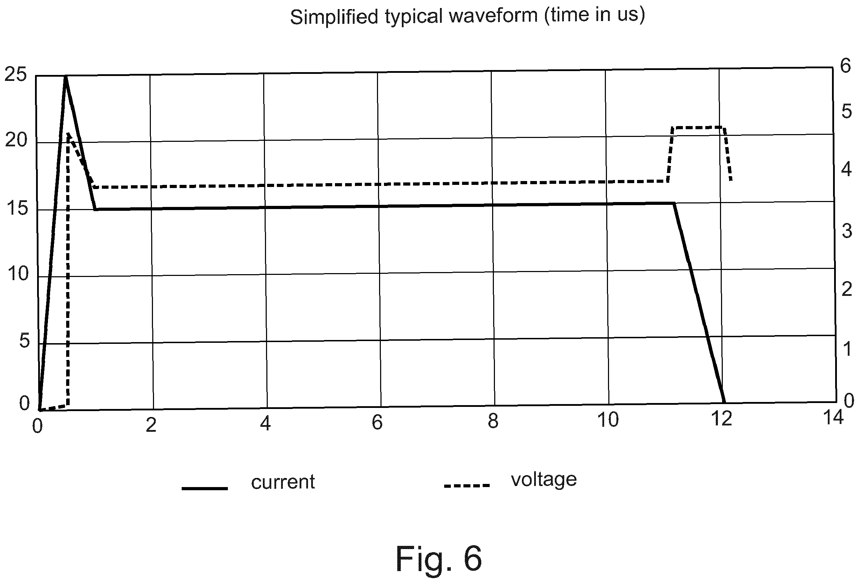

Fig. 6 shows a simplified typical waveform in a fault case with successful de-saturation turn-off without using a crow-bar. The current through the semiconductor (IGBT) falls to "0".

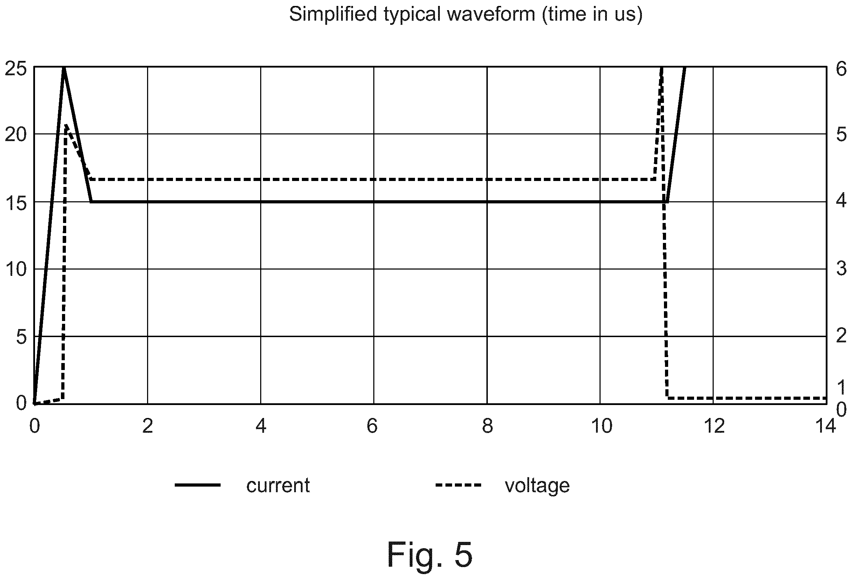

Fig. 5 in turn shows a simplified, typical waveform of an unsuccessful de-saturation turn-off in a fault case. No crow-bar is used. The voltage over the IGBT is low and the current running through it is at a maximum. An explosion of the semiconductor after a turn-off failure occurring in the example at 11µs (highest energy in the semiconductor) is likely.

By applying a new method of commanding the crow-bar to short the DC capacitor as soon as the de-saturation of one switch has been detected, the probability of such a failure can be further reduced, increasing the system availability. It also simplifies the protection control sequence in a half-bridge cell based MMC, because in case of an IGBT failure the DC capacitor of the cell with the failed IGBT is automatically discharged, no separate command is required before shorting the ac-terminals.

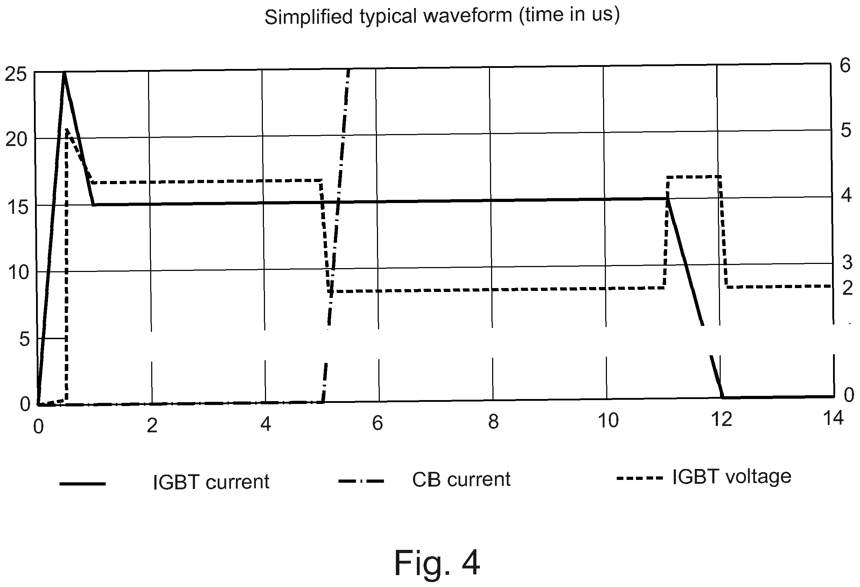

Fig. 4 shows a simplified typical waveform in case of faulty switch (semiconductor) in a cell. According to the disclosed embodiments, a DC crow-bar is activated by a control unit in the moment or preferably after a short delay time, when a de-saturation status is recognized. Current through IGBT falls to "0". A successful de-saturation turn-off follows.

Idea is therefore to command the DC crow-bar to short the DC capacitor as soon as the de-saturation of one of the IGBTs is detected. Compared to waiting for the turn-off after de-saturation to fail, the DC crow-bar already starts conducting before the de-saturated switch is turned-off and by this the crow-bar already shorts the main energy source, the DC capacitor. This may strongly reduce the possibility of a not successful de-saturation turn-off. The voltage across the IGBT will be reduced resulting in safely commutating the current from the IGBTs into the DC crow-bar and an automatic discharge of the DC capacitor.

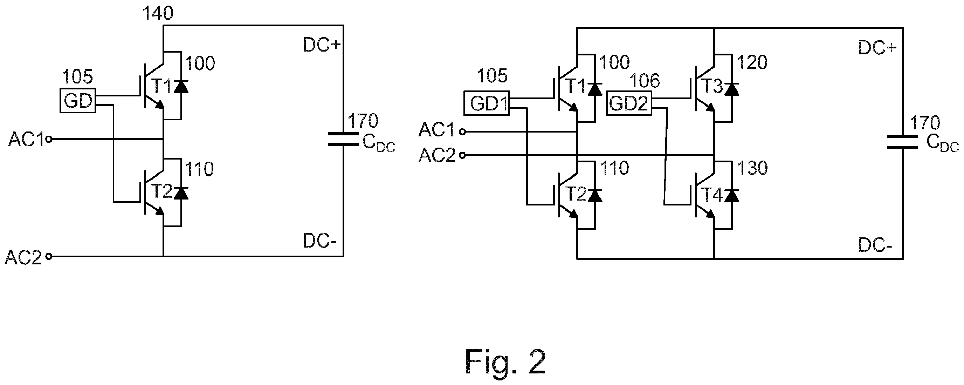

Fig. 2 shows commonly used half- and full-bridges without a short circuiting device for capacitor 170. The capacitor may serve in full- and half bridges as a local energy storage.

In an embodiment of the present application, a control device for an arrangement of switches 100, 110, 120, 130 is disclosed.

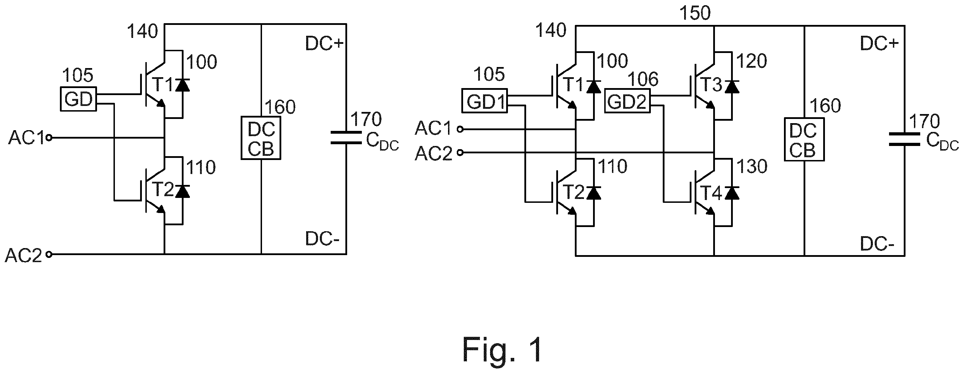

The switches 100, 110, 120, 130 being arranged to form at least one current path or branch 140, 150. The switches may, in particular, form a full-bridge arrangement or a half-bridge arrangement, as shown in Figs. 1 or 2.

Each of the at least one current paths or branches 140, 150 comprises two switches 100, 110, 120, 130. Two AC terminals (AC1, AC2) may be connected to the current paths or branches 140, 150. The control device being adapted to monitor and determine an electrical condition of any of the switches 100, 110, 120, 130, based on predetermined measurable conditions.

The control device may further be adapted to output a control signal, if a predetermined threshold of the monitored and determined conditions is reached and/or may be exceeded for a specific amount of time. The control device may be configured, to send the control signal after an adjustable time delay when the threshold has been reached or exceeded. It may be possible, that the measured value, that has reached or exceeded the threshold, falls below the threshold within the delay time. In this case, the short circuiting device may not be activated. In other words, the time delay may help to avoid an unnecessary activation of the short-circuiting device (crow-bar). Such a temporarily exceeding of thresholds may be caused by external disturbances (e.g. pulses from electromagnetic fields)

The control signal is inputted into a semiconductor based short-circuiting device 160 for activation of said device 160, wherein the semiconductor based short-circuiting device 160 is switched electrically parallel to the current paths 140, 150 and is further configured to provide a short circuiting path for the two AC terminals (AC1, AC2) and to short-circuit a capacitor 170, switched electrically parallel to the current paths 140, 150, in such a duration of time, that a majority of energy stored in the capacitor is dissipated in the semiconductor based short-circuiting device 160 and a minority of the energy stored in the capacitor 170 is dissipated in the switches 100, 110, 120, 130. The amount of energy, a semiconductor can dissipate must be below an "explosion threshold". The energy may typically be calculated according to an I²t integral.

Actually, the AC-terminals may be indirectly short-circuited by the combination of free-wheeling diodes, arranged parallel to the switches, and the short-circuiting device. In other words, the short-circuiting device, together with the diodes may provide a short-circuiting path for the AC terminals AC1 and AC2. Fig. 1 shows the arrangement disclosed in the invention. The full-bridge with switches 100, 110, 120, 130 and the half bridge with switches 100, 110, have each a crow-bar 160 arranged between DC"+" and DC"-". Crow-bar 160 and switches may be configured, to be controlled by the control unit according to embodiments. Control units 105, 106 may be configured, to control switches and crow-bar in the sense of the present application. A control unit according to aspects of the present disclosure may be an additional device, not shown in the drawings.

Another embodiment of the present application discloses that the switches 100, 110, 120,130 comprise semiconductors. The semiconductors may comprise transistors like IGBT's (Insulated Gate Bipolar Transistors), MOSFET's made of SiC (SiliconCarbide) or any other type of semiconductor that is configured to be used as a switch in this high-power application

Another aspect of the present application according to embodiments discloses that one of the monitored conditions is a current saturation value of the semiconductor switches 100, 110, 120, 130. In such a converter cell, the semiconductors, when in an "on"-state, work in a "saturated" area of the set of characteristic curves. De-saturation means, that the operating point of the semiconductor leaves this area. A voltage across collector-emitter path rises, which means that the resistance in the semiconductor rises. The voltage across the emitter-collector path may for example be measured. During a de-saturation, a voltage-jump occurs. The voltage across the emitter-collector path in an instant jumps to a value which corresponds to the voltage value between DC "+" and DC "-" terminals.

Another aspect of the present application according to embodiments may disclose that the threshold for detecting the pre-condition for activating (firing) the short-circuit device 160 (the crow-bar) is a predetermined voltage value, preferably a voltage-jump, measurable over a collector-emitter path on the "healthy" transistor, indicating that a de-saturation in the semiconductors switches 100, 110, 120, 130 commences. As said before, a measured voltage over collector-emitter path (voltage jump) may be a measure to detect a commencing de-saturation.

A further measure to detect a commencing de-saturation may be, for example, a change of the current through the "healthy" semiconductor (transistor). A value di/dt may be continuously monitored. If a high value of di/dt, compared to an operation mode when all switches work properly, is continuously seen for a specific time (some us up to some ms) a short-circuit is likely. An actual de-saturation is a transition to a constant high current.

It may therefore be possible to detect a (commencing) short-circuit via monitoring di/dt over a time span and take counter-measures (firing a crow-bar), before a de-saturation takes place. This may be an alternative method to measuring the voltage over the collector-emitter path as previously described.

In yet another embodiment according to aspects of the invention, it is disclosed that the control device may be further comprising a network interface for connecting the control device to a data network, wherein control the device may be operatively connected to the network interface for at least one of carrying out a command received from the data network and sending device status information to the data network. The control device may further comprise a processing unit, the processing unit may be adapted to convert measured signals into digital signals and may further be adapted to communicate the digital signals to the network interface.

In other words, the control unit in a converter cell may be adapted to be externally controlled by Internet or from a remote location. Preferably, commands or control measures via Internet or a remote location may not directly control a converter cell or a converter. One or more controller layers may be, for reasons of data rate (transmission speed) and/or safety, arranged between an Internet connection and the cell or the converter. All known physical transmission channels or protocols may be used.

In yet another embodiment, a modular multilevel cell comprising a control device according to aspects of the invention may be disclosed. The control device may be an integral part of the cell or may be externally connected with the cell. The control unit may be part of Gate Drivers (GD), configured to control the switches as shown in Figs. 1 to 3.

A further aspect of the invention discloses a chain-link converter comprising modular multilevel cells according embodiments of the present invention.

A further aspect of the invention discloses a method for short-circuiting AC terminals of a modular multilevel cell. The method comprising: Monitoring and measuring a parameter in a semiconductor switch 100, 110, 120, 130 in a current path 140, 150 of the modular multilevel cell; Comparing the measured parameter with a predetermined threshold of the parameter; Issuing a control signal when the predetermined threshold of the parameter has been reached and/or exceeded; and Activating, with the control signal, a semiconductor based short-circuiting device 160, which may be switched electrically parallel to the current paths 140, 150, providing a short circuiting path for the two AC terminals (AC1, AC2) and to short-circuit a capacitor 170, switched electrically parallel to the current paths 140, 150.

In another embodiment, the method according to other aspects further comprises that the predetermined threshold of the parameter may be a current saturation value of the semiconductor switch 100, 110, 120, 130 which signalizes a de-saturation of the semiconductor switch 100, 110, 120, 130.

In yet another aspect of the invention may be disclosed, that the method may further comprise that the predetermined threshold of the current saturation value may be determined such, that the semiconductor based short-circuiting device 160 may be activated in such a duration of time, that a majority of energy stored in the capacitor 170 may be dissipated in the semiconductor based short-circuiting device 160 and a minority of the energy stored in the capacitor 170 may be dissipated in the switches 100, 110, 120, 130.

In general, the presented application discloses and describes devices and methods to operate MMC cells in power converters. In a chain-link or an MMC cell, only a single converter may be connected to the DC capacitor, either with a half-bridge or a full-bridge topology. After a device failure, the ac-terminals need anyhow to be shorted.

Especially for a half-bridge MMC cell, the DC capacitor needs to be discharged before the AC terminals can be shorted. A DC crow-bar 160 acts as a short circuiting device to short the DC capacitor as soon as a de-saturation of one of the switches (transistors), in one of the cells may be detected.

The DC crow-bar already starts conducting before the de-saturated switch may be turned-off and by this the crow-bar already shorts the main energy source, namely the DC capacitor. This reduces the chance of a not successful de-saturation turn-off dramatically, because the voltage across the semiconductor, e.g. IGBT, (collector-emitter path) will be reduced (see e.g. Fig. 6) resulting in safely commutating the current from the semiconductors, e.g. IGBTs, into the DC crow-bar and an automatic discharge of the DC capacitor.

The design of parasitic or intended impedances and damping in the cell has to be done in a way that the current portion commutated into the free-wheeling diodes, which are part of the semiconductor modules, after the zero crossing of the capacitor voltage, does not lead to a destruction of the diode chips.

Further, features illustrated or described as part of one embodiment can be used on or in conjunction with other embodiments to yield yet a further embodiment. It is intended that the description includes such modifications and variations.

While the foregoing is directed to embodiments of the disclosure, other and further embodiments of the disclosure may be devised without departing from the basic scope thereof, and the scope thereof is determined by the claims that follow.

## Claims

1. A control device for an arrangement of switches (100, 110, 120, 130),
the switches (100, 110, 120, 130) being arranged to form at least one current path (140, 150), wherein
each of the at least one current paths (140, 150) comprises two switches (100, 110, 120, 130) and wherein two AC terminals (AC1, AC2) being connected to the current paths (140, 150) and wherein
the control device being adapted to monitor and determine an electrical condition of any of the switches (100, 110, 120, 130), based on predetermined measurable conditions and wherein
the control device is further adapted to output a control signal, if a predetermined threshold of the monitored and determined conditions is reached and/or exceeded for a specific amount of time, wherein
the control signal is inputted into a semiconductor based short-circuiting device (160) after an adjustable time delay for activation of said device (160), wherein
the semiconductor based short-circuiting device (160) is switched electrically parallel to the current paths (140, 150), and is further configured to provide a short circuiting path for the two AC terminals (AC1, AC2) and to short-circuit a capacitor (170), switched electrically parallel to the current paths (140, 150), in such a duration of time, that a majority of energy stored in the capacitor is dissipated in the semiconductor based short-circuiting device (160) and a minority of the energy stored in the capacitor (170) is dissipated in the switches (100, 110, 120, 130).

2. The control device according to claim 1, wherein the switches (100, 110, 120,130) comprise semiconductors.

3. The control device according to any of claims 1 and 2, wherein the semiconductors comprise transistors.

4. The control device according to one of claims 1 to 3, wherein one of the monitored conditions is a current saturation value of the semiconductor switches (100, 110, 120, 130).

5. The control device according to one of claims 1 to 4, wherein the threshold for detecting the condition for activation of the short-circuit device 160 is a predetermined current saturation value, indicating that a de-saturation in the semiconductors switches (100, 110, 120, 130) commences.

6. The control device according to one of claims 1 to 5, further comprising a network interface for connecting the control device to a data network, wherein
the device is operatively connected to the network interface for at least one of carrying out a command received from the data network and sending device status information to the data network.

7. A modular multilevel cell comprising a control device according to one of claims 1 to 6.

8. A chain-link converter comprising modular multilevel cells according to claim 7.

9. A method for short-circuiting AC terminals of a modular multilevel cell, comprising
Monitoring and measuring a parameter in a semiconductor switch (100, 110, 120, 130) in a current path (140, 150) of the modular multilevel cell;
Comparing the measured parameter with a predetermined threshold of the parameter; Issuing a control signal when the predetermined threshold of the parameter has been reached and/or exceeded; and
Activating, with the control signal, a semiconductor based short-circuiting device (160), which is switched electrically parallel to the current paths (140, 150), to provide a short circuiting path for the two AC terminals (AC1, AC2) and to short-circuit a capacitor (170), switched electrically parallel to the current paths (140, 150).

10. The method according to claim 9, wherein the predetermined threshold of the parameter is a current saturation value of the semiconductor switch (100, 110, 120, 130) which signalizes a de-saturation of the semiconductor switch (100, 110, 120, 130).

11. The method according to one of claims 9 and 10, wherein, after the predetermined threshold of the current saturation value is determined, the semiconductor based short-circuiting device (160) is activated after such a duration of time, that a majority of energy stored in the capacitor (170) is dissipated in the semiconductor based short-circuiting device (160) and a minority of the energy stored in the capacitor (170) is dissipated in the switches (100, 110, 120, 130).
